# EUROPÄISCHE PATENTSCHRIFT

(11) **EP 3 230 485 B1**
(45) Veröffentlichungstag und Bekanntmachung des Hinweises auf die Patenterteilung: **27.05.2020**
(21) Anmeldenummer: 15794102.2
(22) Anmeldetag: 29.10.2015
(51) Int. Cl.: C23C 2/00, C23C 2/40, B05C 3/12, F16C 13/02, F16C 33/10

(54) **ROLLE ZUR UMLENKUNG ODER FÜHRUNG EINES ZU BESCHICHTENDEN METALLBANDES IN EINEM METALLISCHEN SCHMELZENBAD**
ROLLER FOR DEFLECTING OR GUIDING A METAL STRIP, WHICH IS TO BE COATED, IN A METAL MELT BATH
ROULEAU DE DÉVIATION OU DE GUIDAGE D'UNE BANDE MÉTALLIQUE DANS UN BAIN DE MÉTAL EN FUSION

(30) Priorität: 10.12.2014 DE 102014118316
(43) Veröffentlichungstag der Anmeldung: 18.10.2017
(73) Patentinhaber: ThyssenKrupp Steel Europe AG, 47166 Duisburg (DE); thyssenkrupp AG, 45143 Essen (DE)
(72) Erfinder: JENDRISCHIK, Gerd, 46535 Dinslaken (DE); MATZKEN, Frank, 46562 Voerde (DE); PEITZ, Alfred, 46145 Oberhausen (DE); PETERS, Michael, 47533 Kleve (DE)
(74) Vertreter: Cohausz & Florack
(86) Internationale Anmeldenummer: PCT/EP2015/075057
(87) Internationale Veröffentlichungsnummer: WO 2016/091450

(56) Entgegenhaltungen:
- EP-A1- 0 687 746
- EP-A1- 2 145 845
- EP-A1- 2 743 367
- WO-A1-2004/065651
- WO-A1-2005/031178
- DE-A1-102011 078 878

## Beschreibung

Die Erfindung betrifft eine Rolle zur Umlenkung oder Führung eines zu beschichtenden Metallbandes in einem metallischen Schmelzenbad, mit koaxial zueinander angeordneten Lagerzapfen zur Drehlagerung der Rolle.

Beim Schmelztauchbeschichten von Metallband, insbesondere Stahlband, wird das zu beschichtende Band mittels einer im Schmelzenbad angeordneten Umlenkrolle durch die metallische Schmelze geleitet. Zusätzlich wird der aus dem Schmelzenbad herauslaufende Bandabschnitt üblicherweise durch ebenfalls im Schmelzenbad angeordnete Führungsrollen (sogenannte "Stabirollen", Bodenrollen, Stabilisierungsrollen oder Passline-Rollen) geführt, um einen im Wesentlichen vertikalen und schwingungsfreien Verlauf des Bandes durch einen von Abstreifdüsen begrenzten Spalt sicherzustellen. Mittels der Abstreifdüsen wird überschüssiges Beschichtungsmaterial vom Band abgestreift bzw. die Schichtdicke des am Band anhaftenden Beschichtungsmaterials eingestellt.

Die in Schmelztauchbeschichtungsanlagen des Standes der Technik verwendeten Umlenkrollen und Führungsrollen sind als Vollmaterialrollen, offene Mantelrollen oder geschlossene Hohlrollen ausgeführt.

Geschlossene Hohlrollen finden heute noch Anwendung, sind aber nur mit aufwendiger Belüftungs- oder Entlüftungstechnik zu betreiben, da es aufgrund der hohen Temperaturen im Schmelzenbad bei geschlossenem Rollenhohlraum zu sehr hohen Innendrücken bis hin zum explosionsartigen Versagen kommen kann, insbesondere bei ungewollten Flüssigkeitseinschlüssen im Rollenhohlraum.

Aufgrund des Umstandes, dass die Umlenk- und Führungsrollen im Schmelzenbad normalerweise nicht mit einem eigenen Antrieb versehen sind, sondern durch die Bewegung des an ihnen mit Umschlingung anliegenden Bandes gedreht werden, ist die Verwendung von Vollmaterialrollen insbesondere bei der Schmelztauchbeschichtung von dünnen Bändern problematisch. Durch das hohe Gewicht von Vollmaterialrollen wird insbesondere bei dünnen Bändern eine Drehung der Rollen durch das Band erschwert, was zu Relativbewegungen (Schlupf) zwischen Band und Rolle führen kann. Hierdurch können Kratzer und andere Beschichtungsfehler verursacht werden, welche die Beschichtungsqualität mindern.

Mantelrollen bestehen üblicherweise aus einem hohlzylindrischen Mantelrohr, das an seinen beiden Enden über speichenartige Stege oder Aussparungen, z.B. Bohrungen aufweisende Stirnplatten mit den Lagerzapfen verbunden ist. Als Mantelrollen ausgeführte Schmelzenbadrollen haben den Vorteil, dass sie sich im Vergleich zu den schweren Vollmaterialrollen leichter drehen lassen und im Vergleich zu den geschlossenen Hohlrollen keinen geschlossenen Hohlraum, in welchem ein kritischer Innendruck auftreten kann, aufweisen. Aufgrund der stirnseitigen Öffnungen stellt sich jedoch bei der Drehung der Mantelrollen eine Pumpwirkung ein, wodurch es im Bereich der speichenartigen Stege bzw. der Aussparungen der Stirnplatten zu einem turbulenten Stoffstrom der Metallschmelze kommt, der zu einem sehr erheblichen Materialabtrag (Verschleiß) im Bereich der Stege bzw. Stirnplatten führt. Aus diesem Grund ist die Standzeit von in Schmelztauchbeschichtungsanlagen verwendeten Mantelrollen relativ gering.

Den genannten Bauformen der Umlenk- und Führungsrollen ist gemein, dass ihre Drehlager üblicherweise als Gleitlager ausgeführt werden, wobei die Lagerzapfen der Rollen (sowie die die Lagerzapfen aufnehmenden Gegenlager) sehr hohen Verschleißeinwirkungen unterworfen sind. Der hohe Verschleiß der typischerweise aus Stahl gefertigten Lagerzapfen ist hauptsächlich durch die hohen Lagerkräfte und die Aggressivität der Metallschmelze bedingt.

Aus EP 2 743 367 A1 ist eine Tauchbadrolle für ein Tauchbad mit flüssigem Metall mit einem Rollenkörper und Lagerzapfen bekannt, wobei jeder Lagerzapfen eine Schutzschicht, die eine Wolfram- oder Molybdänbasisschicht ist, aufweist.

Aus EP 2 145 845 A1 ist eine Tauchbadrolle für ein Tauchbad mit flüssigem Metall mit einem Rollenkörper und Lagerzapfen bekannt, wobei jeder Lagerzapfen mindestens eine Nut aufweist, die sich in Umfangsrichtung über den gesamten Umfang des Lagerzapfens erstreckt und die mittels einer durch thermisches Spritzen erzeugten Schutzschicht aufgefüllt ist.

Davon ausgehend lag der vorliegenden Erfindung die Aufgabe zugrunde, eine Rolle der eingangs genannten Art bereitzustellen, die eine vergleichsweise hohe Standzeit bietet und mit der sich eine hohe Beschichtungsqualität beim Schmelztauchbeschichten von Metallband, insbesondere Stahlband erzielen lässt.

Gelöst wird diese Aufgabe durch eine Rolle mit den im Anspruch 1 angegebenen Merkmalen. Bevorzugte und vorteilhafte Ausgestaltungen der erfindungsgemäßen Rolle sind in den Unteransprüchen angegeben.

Die erfindungsgemäße Rolle ist zu ihrer Drehlagerung mit koaxial zueinander angeordneten Lagerzapfen versehen, wobei der jeweilige Lagerzapfen mehrere axial voneinander beabstandete ringförmige Erhebungen aufweist, welche mit einer Gleitlagerbeschichtung versehen oder aus einer Gleitlagerbeschichtung gebildet sind.

Während des Betriebes der erfindungsgemäßen Rolle bildet sich in den zwischen den ringförmigen Erhebungen liegenden Vertiefungen ein Gleitfilm aus dem metallischen Schmelztauchbeschichtungsmaterial, bei dem es sich z.B. um Aluminium oder um Beschichtungsmaterial auf Basis von Zink oder Aluminium handeln kann. Insbesondere wird hierdurch während des Betriebes ein hydrodynamisches Schmierpolster ausgebildet, welches zur Verringerung der Beanspruchung der tragenden Flächen der Drehlagerung führt. Diese Entlastungswirkung des hydrodynamischen Schmierpolsters steigt mit zunehmender Drehzahl des Lagerzapfens, sodass bei zunehmender Drehzahl der Entlastungseffekt verstärkt wird. Daher eignet sich diese Art der Drehlagerung insbesondere für getauchte Rollen zum Schmelztauchbeschichten von relativ dünnen Metallbändern, insbesondere dünnen Stahlbändern, die mit vergleichsweise hohen Bandgeschwindigkeiten durch das Schmelzenbad hindurchgeleitet werden sollen.

Versuche der Erfinder in einer Schmelztauchbeschichtungsanlage zum Feueraluminieren von Stahlband haben ergeben, dass durch die erfindungsgemäße Ausführung der Lagerzapfen eine Erhöhung der Standzeiten der im Schmelzenbad angeordneten Umlenk- und Führungsrollen auf etwa das Doppelte und mehr der Standzeiten von zuvor verwendeten herkömmlichen Umlenk- und Führungsrollen erreicht werden konnte.

Bei der Gleitlagerbeschichtung der erfindungsgemäß ausgeführten Lagerzapfen handelt es sich vorzugsweise um eine Gleitlagerbeschichtung auf Basis von Molybdän, Wolfram und/oder Chrom. Hierdurch ergeben sich gute bis sehr gute Gleiteigenschaften sowie eine hohe Verschleißbeständigkeit der Lagerzapfen der Schmelzbadrolle.

Erfindungsgemäß steht die Gleitlagerbeschichtung im Bereich der ringförmigen Erhebungen des jeweiligen Lagerzapfens der Schmelzbadrolle gegenüber einer Mantelfläche des Lagerzapfens um ein Maß im Bereich von 0,1 mm bis 1,0 mm, vorzugsweise im Bereich von 0,1 mm bis 0,5 mm radial vor. Hierdurch wird das oben erwähnte hydrodynamische Schmierpolster sehr zuverlässig erreicht und eine Verschleißwirkung des metallischen Schmelztauchbeschichtungsmaterials, welches in die zwischen den ringförmigen Erhebungen liegenden Vertiefungen eingedrungen ist und dort als Gleitfilm wirken soll, minimiert.

Eine weitere vorteilhafte Ausgestaltung der Erfindung ist dadurch gekennzeichnet, dass die Gleitlagerbeschichtung in Ringnuten des Lagerzapfens eingebracht ist, wobei die Ringnuten zwischen den ringförmigen Erhebungen angeordnet sind, und wobei die Gleitlagerbeschichtung im Bereich der Ringnuten ringförmige Vertiefungen aufweist, die gegenüber den ringförmigen Erhebungen radial beabstandet sind. Die durch die Ringnuten erzeugte Oberflächenstruktur des Lagerzapfens verbessert die Verbindung von Lagerzapfen und Gleitbeschichtung. Insbesondere ermöglichen die Ringnuten, bei vergleichsweise geringem Materialverbrauch für die Gleitbeschichtung die ringförmigen Erhebungen aus der Gleitbeschichtung herzustellen und zugleich die Mantelfläche des Lagerzapfens auch zwischen den ringförmigen Erhebungen mit der Gleitbeschichtung zu versehen, um den Lagerzapfen auch dort gegen die Verschleißwirkung des metallischen Schmelztauchbeschichtungsmaterials, welches in den Bereich zwischen den ringförmigen Erhebungen eindringt, zu schützen. Zudem werden in diesem Fall, wenn die Gleitlagerbeschichtung nicht nur im Bereich der ringförmigen Erhebungen, sondern (optional) auch in den Ringnuten des Lagerzapfens vorgesehen ist, die Gleiteigenschaften des Lagerzapfens verbessert. Vorzugsweise werden die Ringnuten hierzu mit einer Tiefe im Bereich von 0,05 mm bis 0,4 mm in dem Lagerzapfen ausgebildet.

Um eine hohe Beschichtungsqualität beim Schmelztauchbeschichten von Metallband, insbesondere Stahlband, zu erzielen sowie zur Erhöhung der Standzeit der Schmelzbadrolle ist ebenfalls von Vorteil, wenn nach einer weiteren bevorzugten Ausgestaltung der Erfindung die Rolle als Mehrstoffrolle, insbesondere als Zweistoffrolle ausgebildet ist. In diesem Fall weist die Rolle einen Rollenmantel auf, der vorzugsweise aus Stahl gefertigt ist, wobei an dem jeweiligen Lagerzapfen ein im Wesentlichen zylindrischer oder kreisscheibenförmiger Verbindungsabschnitt aus Stahl vorgesehen ist, der sich radial in Richtung des Rollenmantels erstreckt, wobei mindestens einer der Verbindungsabschnitte mindestens eine stirnseitig des Rollenmantels mündende Durchgangsöffnung aufweist, und wobei die mindestens eine Durchgangsöffnung mit einem gasdurchlässigen Stopfenelement aus keramischem Werkstoff verschlossen ist. Das Stopfenelement schließt dabei vorzugsweise im Wesentlichen flächenbündig mit der äußeren Stirnseite des zylindrischen oder kreisscheibenförmigen Verbindungsabschnitts ab.

Die so ausgebildete Rolle entspricht einer Mantelrolle insoweit als ihr Rollenmantel einen Hohlraum definiert. Dieser Hohlraum kann leer bzw. gasgefüllt sein oder vorzugsweise mit einem Füllmaterial, das eine geringere Dichte als die des Mantelrollenwerkstoffs aufweist, verfüllt sein. Das mindestens eine gasdurchlässige Stopfenelement stellt jeweils sicher, dass sich in dem Hohlraum kein kritischer Innendruck aufbauen kann. Zudem verhindert das mindestens eine Stopfenelement ein Eindringen von metallischer Schmelze in den Hohlraum sowie die bei herkömmlichen Mantelrollen üblicherweise auftretende Pumpwirkung. Im Vergleich zu herkömmlichen Vollmaterialrollen zeichnet sich die gemäß der bevorzugten Ausgestaltung ausgebildete Rolle durch ein relativ geringes Gewicht aus. Dies gilt insbesondere für eine Ausführung, bei welcher der durch ihren Rollenmantel definierte Hohlraum leer bzw. gasgefüllt ist, aber auch bei einer Ausführung, bei der dieser Hohlraum mit Füllmaterial, das eine geringere Dichte als die des Mantelrollenwerkstoffs aufweist, verfüllt ist. Aufgrund des relativ geringen Gewichts der Rolle besitzt diese hinsichtlich ihrer Drehung durch das an ihr anliegende, zu beschichtende Band gute Dreheigenschaften als Voraussetzung für eine hohe Beschichtungsqualität des Bandes. Zugleich ergibt sich durch das relativ geringe Gewicht der Rolle eine Entlastung ihrer Drehlagerung, was günstig für das Erreichen hoher Standzeiten der Rolle ist. Zudem trägt das mindestens eine gasdurchlässige Stopfenelement, welches die oben erwähnte Pumpwirkung und den damit einhergehenden Materialabtrag verhindert, zu hohen Standzeiten der Rolle bei.

Ein Problem beim Schmelztauchbeschichten (sogenannten Feuerbeschichten) von dünnem Metallband, insbesondere Stahlband, sind die ungenügenden Mitlaufeigenschaften der Schmelzbadrollen, was zu Schlupf zwischen Band und Rolle oder sogar zu einem Stillstand der Rolle im Schmelzenbad gegenüber dem laufenden, durch die Rolle umgelenkten Band führen kann. Durch Kombination der erfindungsgemäß ausgebildeten Lagerzapfen mit der vorzugsweise als Zweistoff- oder Mehrstoffrolle ausgeführten Rolle ergibt sich eine Leichtlaufrolle mit sehr guten Mitlaufeigenschaften für das Schmelztauchbeschichten von dünnem Metallband.

Nach einer weiteren vorteilhaften Ausgestaltung der Erfindung kann das gasdurchlässige Stopfenelement so beschaffen oder zusammengesetzt sein, dass es durch eine auf Nichteisenmetall, insbesondere Aluminium oder Zink basierende Metallschmelze nicht benetzbar ist. Hierdurch kann ein Eindringen von Schmelzenmaterial in das Stopfenelement und damit eine Verminderung der Gasdurchlässigkeit des Stopfenelements weitestgehend ausgeschlossen werden.

Eine weitere vorteilhafte Ausgestaltung der Erfindung sieht vor, dass sich die durch das Stopfenelement verschlossene Durchgangsöffnung von innen nach außen verengt, wobei das Stopfenelement entsprechend geformt und in der Durchgangsöffnung axial festgelegt ist. Durch diese Ausgestaltung lässt sich auf fertigungstechnisch einfache Weise eine zuverlässige Lagesicherung des Stopfenelements erzielen.

Eine weitere vorteilhafte Ausgestaltung der Erfindung ist dadurch gekennzeichnet, dass in dem durch den Rollenmantel begrenzten Raum ein oder mehrere Füllkörper aus keramischem Werkstoff angeordnet sind. Der oder die Füllkörper verringern bzw. füllen das durch den Rollenmantel begrenzte Leervolumen, so dass das im Hohlraum der Rolle enthaltene Gasvolumen entsprechend reduziert oder minimiert ist. Hierdurch lässt sich die Gefahr des Auftretens eines kritischen Innendrucks in der Rolle sehr sicher ausschließen. Im Vergleich zu einer herkömmlichen Mantelrolle mit relativ großem Gasvolumen weist die gemäß der voranstehend genannten Ausgestaltung ausgeführte Rolle zwar durch den oder die Füllkörper aus keramischem Material ein höheres Gesamtgewicht auf, jedoch kann die Gewichtszunahme durch die Verwendung von relativ leichtem keramischen Material begrenzt werden. Beispielsweise können der oder die Füllkörper aus keramischem Material auf der Basis von Calciumsilicat, vorzugsweise aus feinporiger und/oder kohlenstofffaserverstärkter Calciumsilicat-Keramik hergestellt sein. Die Rohdichte eines in der erfindungsgemäßen Rolle eingesetzten Füllkörpers beträgt vorzugsweise weniger als 900 kg/m³. Sie kann beispielsweise im Bereich von 800 bis 850 kg/m³ liegen.

Nach einer bevorzugten Ausgestaltung der erfindungsgemäßen Rolle liegt deren Gesamtdichte im Bereich des 0,8-fachen bis 1,2-fachen, vorzugsweise 1,0-fachen bis 1,1-fachen der Dichte der verwendeten Metallschmelze, beispielsweise einer auf Aluminium oder Zink basierenden Metallschmelze. Die durch das Gewicht der Rolle verursachten Lagerkräfte sind somit relativ klein. Vorzugsweise ist das Gesamtgewicht der erfindungsgemäßen Rolle erheblich geringer als das Gesamtgewicht von aus Stahl gefertigten Vollmaterialrollen.

Nach einer weiteren bevorzugten Ausgestaltung der erfindungsgemäßen Rolle ist die äußere Stirnfläche des jeweiligen Verbindungsabschnitts von Rollenmantel und Lagerzapfen mit einer Schutzbeschichtung, z.B. einer Schutzbeschichtung aus Aluminium-Zirkonoxid versehen. Durch diese Ausgestaltung kann eine weitere Verringerung des durch die aggressive Metallschmelze bedingten Verschleißes der Rolle bzw. eine weitere Erhöhung der Standzeiten der Rolle erreicht werden.

Nachfolgend wird die Erfindung anhand einer mehrere Ausführungsbeispiele darstellenden Zeichnung näher erläutert. Es zeigen:
- Fig. 1: eine Schmelztauchbeschichtungsvorrichtung in schematischer Darstellung;
- Fig. 2: eine Rolle zur Anordnung in einem Schmelzenbad einer Schmelztauchbeschichtungsanlage, in einem Axialschnitt;
- Fig. 3: einen Lagerzapfen der Rolle der Fig. 2 in einer axialen Darstellung mit einem aufgebrochenen Teilabschnitt;
- Fig. 4: den Lagerzapfen der Fig. 3 in einer Stirnseitenansicht; und
- Fig. 5: einen Lagerzapfen einer erfindungsgemäßen Rolle in einer Axialschnittansicht.

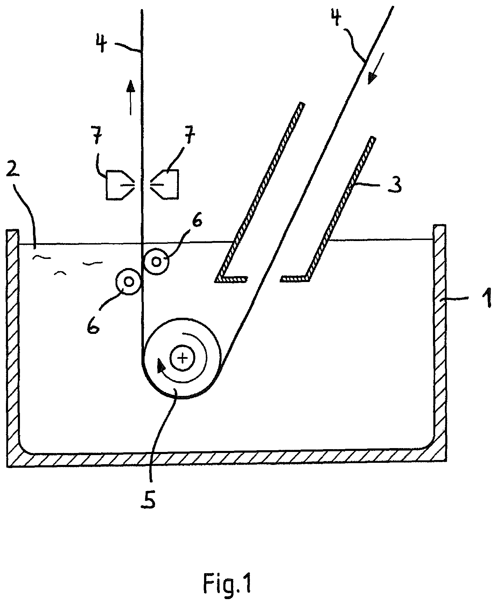

Die in Fig. 1 schematisch dargestellte Schmelztauchbeschichtungsvorrichtung umfasst ein Schmelzenbadgefäß 1, das mit einer metallischen Schmelze 2, beispielsweise einer auf Aluminium oder Zink basierenden Metallschmelze befüllt ist. Über einen in die Metallschmelze 2 eingetauchten Rüssel 3 wird ein zu beschichtendes Stahlband 4 in die Metallschmelze 2 geleitet. In dem Schmelzenbadgefäß 1 ist eine Umlenkrolle (sogenannte Tauch- oder Potrolle) 5 angeordnet, mittels der das Stahlband 4 aus der schräg abwärtsgerichteten Laufrichtung in eine nach oben gerichtete, vorzugsweise im Wesentlichen vertikale Laufrichtung umgelenkt wird. Des Weiteren sind in dem Schmelzenbadgefäß 1 eine oder zwei Führungsrollen (sogenannte Stabilisierungsrollen oder "Stabirollen") 6 angeordnet, welche dazu dienen, Schwingungen des Stahlbandes 4 zu unterdrücken und damit für einen möglichst lagegenauen Verlauf des Bandes 4 in Bezug auf eine Abstreifvorrichtung 7 zu sorgen. Die Abstreifvorrichtung entfernt überschüssiges Beschichtungsmaterial von der Oberfläche des beschichteten Stahlbandes 4 und weist hierzu typischerweise mit Druckluft oder Inertgas betriebene Abstreifdüsen 7 in Form von Flachstrahldüsen auf.

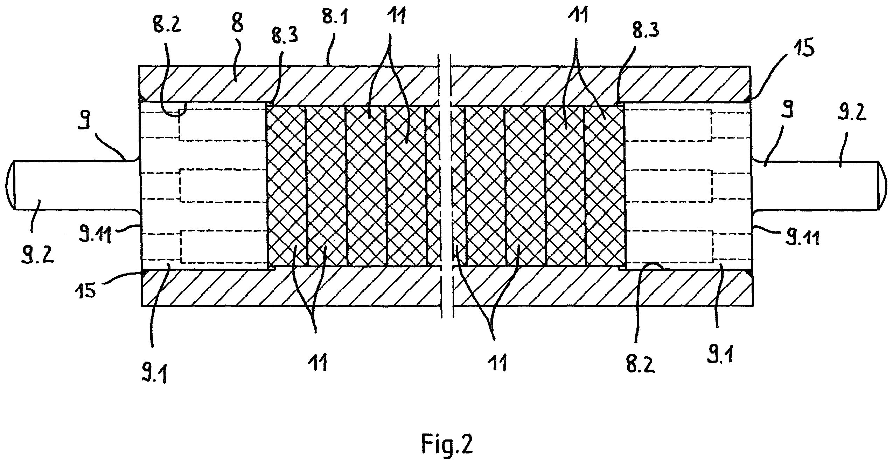

Die Umlenkrolle 5 und/oder mindestens eine Führungsrolle 6 haben einen Aufbau, der beispielhaft in den Figuren 2 bis 4 dargestellt ist. Die Rolle 5 oder 6 weist einen Rollenmantel 8 aus Stahl, beispielsweise Chrom-Molybdän-Stahl auf. Der Rollenmantel 8 ist rohrförmig ausgebildet. Die Mantelfläche 8.1 der Rolle kann dabei bombiert ausgeführt sein, so dass der Außendurchmesser der Rolle 5 oder 6 von der Mitte aus zu den Rollenenden hin abnimmt.

An den Enden des Rollenmantels 8 sind koaxial zueinander angeordnete Lagerzapfen 9 angeordnet, die ebenfalls aus Stahl, beispielsweise aus Chrom-Molybdän-Stahl hergestellt sind. Der jeweilige Lagerzapfen 9 weist einen im Wesentlichen zylindrischen oder kreisscheibenförmigen Verbindungsabschnitt 9.1 auf. Der Verbindungsabschnitt 9.1 ist vorzugsweise einteilig mit dem an der Stirnseite des Rollenmantels 8 axial vorstehenden Zapfenteil 9.2 ausgebildet. Der Verbindungsabschnitt 9.1 erstreckt sich von dem Zapfenteil 9.2 bzw. der Drehachse der Rolle 5 oder 6 radial in Richtung des Rollenmantels 8. Der Rollenmantel 8 weist an seinen Enden durchmessererweiterte Innenflächen 8.2 auf, die jeweils einen umlaufenden Innenabsatz 8.3 definieren. Die Verbindungsabschnitte 9.1 der Lagerzapfen 9 sind formschlüssig in die durchmessererweiterten Innenabschnitte des Rollenmantels 8 eingeschoben und mit diesem durch ringförmige Schweißnähte 15 fest verbunden.

Der Außendurchmesser des Zapfenteils 9.2 des Lagerzapfens 9 ist um einen Faktor im Bereich von 3,0 bis 7,0, vorzugsweise 4,0 bis 5,0, kleiner als der Außendurchmesser des Rollenmantels 8. Die Verwendung eines Lagerzapfens 9 mit einem entsprechend kleinen Zapfendurchmesser (Durchmesser des Zapfenteils 9.2) wird bevorzugt, da das Zapfenteil 9.2 dann einen geringeren Drehwiderstand bildet und sich die Rolle 5 oder 6 somit leichter drehen lässt.

Der Verbindungsabschnitt 9.1 des jeweiligen Lagerzapfens 9 weist mindestens eine oder - wie in den Fig. 2 bis 4 zu erkennen - mehrere Durchgangsöffnungen 9.3 auf, die stirnseitig des Rollenmantels 8 sowie an der innen liegenden Seite des Verbindungsabschnitts 9.1 bzw. Lagerzapfens 9 münden. In dem gezeigten Ausführungsbeispiel sind in dem jeweiligen Verbindungsabschnitt 9.1 oder Lagerzapfen 9 beispielsweise vier Durchgangsöffnungen 9.3 vorgesehen, die im Wesentlichen parallel zueinander verlaufen und gleichmäßig voneinander beabstandet auf einem gemeinsamen Teilkreis angeordnet sind. In Abwandlung dieses Ausführungsbeispiels kann der Verbindungsabschnitt 9.1 oder Lagerzapfen 9 auch weniger oder mehr als vier Durchgangsöffnungen 9.3 aufweisen. Erfindungsgemäß ist die jeweilige Durchgangsöffnung 9.3 mit einem gasdurchlässigen Stopfenelement (Einsatz) 10 aus keramischem Werkstoff verschlossen.

Das Stopfenelement 10 ist beispielsweise auf Basis von Calciumsilicat, vorzugsweise aus einer feinporigen Calciumsilicat-Keramik hergestellt. Calciumsilicat-Keramik ist durch Nichteisen-Metallschmelzen wie AlSi-Schmelzen oder zinkbasierte Schmelzen nicht oder nur sehr schlecht benetzbar. Zur Erhöhung seiner Festigkeit, kann der keramische Werkstoff des Stopfenelements 10 Verstärkungsfasern, beispielsweise Kohlenstofffasern enthalten.

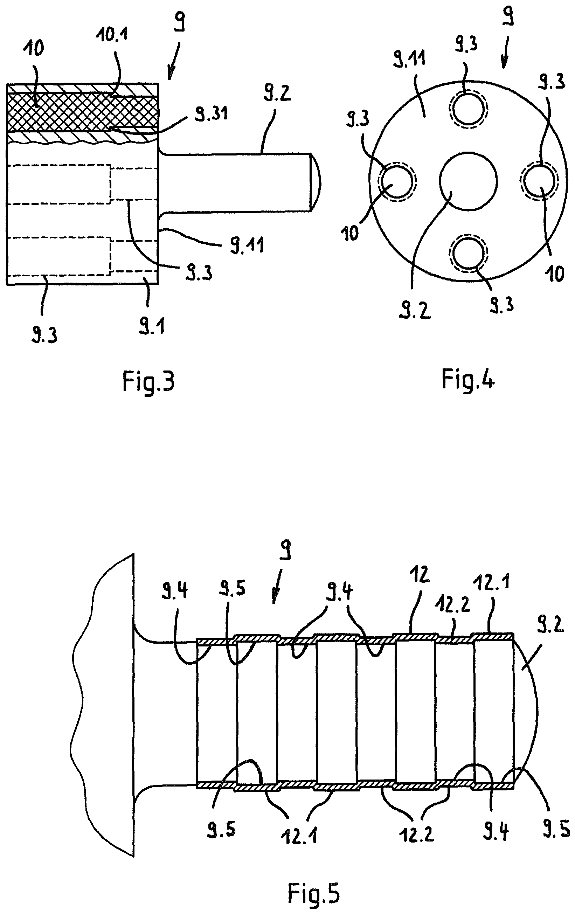

Die jeweilige Durchgangsöffnung 9.3 ist vorzugsweise als Bohrung ausgebildet. Sie weist jeweils einen Absatz 9.31 auf, so dass sie sich von innen nach außen verengt. Das bolzenförmige Stopfenelement 10 ist entsprechend geformt, weist also ebenfalls einen Absatz 10.1 auf und lässt sich somit in der Durchgangsöffnung 9.3 axial festlegen. Im montierten Zustand schließt das Stopfenelement 10 im Wesentlichen flächenbündig mit der äußeren Stirnfläche 9.11 des Verbindungsabschnitts 9.1 des Lagerzapfens 9 ab (vgl. Fig. 2 und 3).

Die Stirnfläche 9.11 des jeweiligen Verbindungsabschnitts 9.1 kann mit einer Schutzbeschichtung, z.B. einer Schutzbeschichtung aus Aluminium-Zirkonoxid versehen sein.

Vorzugsweise ist der durch den Rollenmantel 8 und die Verbindungsabschnitte 9.1 der Lagerzapfen 9 begrenzte Hohlraum der Rolle 5 oder 6 mit einem oder mehreren Füllkörpern 11 aus keramischem Werkstoff verfüllt. In dem in Fig. 2 dargestellten Ausführungsbeispiel sind in dem Rollenmantel 8 eine Vielzahl kreisscheibenförmiger Füllkörper 11 aneinandergereiht angeordnet. Die Füllkörper 11 sind beispielsweise aus dem gleichen Werkstoff wie die Stopfenelemente (Keramik-Einsätze) 10 hergestellt. Der Hohlraum der Rolle 5 oder 6 zwischen den Verbindungsabschnitten ist 9.1 ist vorzugsweise im Wesentlichen vollständig mit den scheibenförmigen Füllkörpern 11 verfüllt. Das Durchmesserverhältnis zwischen dem Außendurchmesser und dem Innendurchmesser des Rollenmantels 8 liegt beispielsweise im Bereich von 1,2 bis 2,0, vorzugsweise im Bereich von 1,4 bis 1,6. Die Gesamtdichte der Rolle 5 oder 6 liegt beispielsweise im Bereich des 0,8-fachen bis 1,2-fachen, vorzugsweise 1,0-fachen bis 1,1-fachen der Dichte der verwendeten Metallschmelze 2, bei der es sich insbesondere um eine auf Aluminium oder Zink basierende Metallschmelze handeln kann.

Das axial vorstehende Zapfenteil 9.2 des Lagerzapfens 9 ist mit einer Gleitlagerbeschichtung 12 versehen. Die Gleitlagerbeschichtung 12 ist vorzugsweise aus Molybdän hergestellt. Zusätzlich oder alternativ kann sie auch Wolfram und/oder Chrom enthalten.

Die Gleitlagerbeschichtung 12 ist streifenförmig ausgebildet. Sie weist mehrere axial voneinander beabstandete ringförmige Erhebungen (Streifen) 12.1 auf. Das Material der Gleitlagerbeschichtung 12 ist hierzu in entsprechend beabstandete Ringnuten 9.4 des Lagerzapfens 9 eingebracht und/oder auf ringförmige Erhebungen 9.5 des Lagerzapfens 9 aufgebracht. Die Nuten 9.4 besitzen beispielsweise eine Tiefe im Bereich von 0,05 mm bis 0,4 mm. Die Schichtdicke der Gleitlagerbeschichtung 12 ist über ihre axiale Erstreckung im Wesentlichen gleichmäßig ausgebildet. Dementsprechend zeichnet sich die durch die Ringnuten 9.4 definierte Oberflächenstruktur des Zapfenteils 9.2 in der Mantelfläche der Gleitlagerbeschichtung 12 ab. In den zwischen den ringförmigen Erhebungen 12.1 liegenden Vertiefungen 12.2 der Gleitlagerbeschichtung 12 kann sich metallische Schmelze ansammeln und einen Gleitfilm bilden.

## Patentansprüche

1. Rolle (5, 6) zur Umlenkung oder Führung eines zu beschichtenden Metallbandes in einem metallischen Schmelzenbad, mit koaxial zueinander angeordneten Lagerzapfen (9) zur Drehlagerung der Rolle (5, 6), **dadurch gekennzeichnet, dass** der jeweilige Lagerzapfen (9) mehrere axial voneinander beabstandete ringförmige Erhebungen (9.5; 12.1) aufweist, welche mit einer Gleitlagerbeschichtung (12) versehen oder aus einer Gleitlagerbeschichtung (12) gebildet sind, und dass die Gleitlagerbeschichtung (12) im Bereich der ringförmigen Erhebungen (9.5; 12.1) um ein Maß im Bereich von 0,1 mm bis 1,0 mm gegenüber einer Mantelfläche des Lagerzapfens (9) radial vorsteht.

2. Rolle nach Anspruch 1, **dadurch gekennzeichnet, dass** die Gleitlagerbeschichtung (12) eine Gleitlagerbeschichtung auf Basis von Molybdän, Wolfram und/oder Chrom ist.

3. Rolle nach Anspruch 1 oder 2, **dadurch gekennzeichnet, dass** die Gleitlagerbeschichtung (12) im Bereich der ringförmigen Erhebungen (9.5; 12.1) gegenüber einer Mantelfläche des Lagerzapfens (9) um ein Maß im Bereich von 0,1 mm bis 0,5 mm radial vorsteht.

4. Rolle nach einem der Ansprüche 1 bis 3, **dadurch gekennzeichnet, dass** die Gleitlagerbeschichtung (12) in Ringnuten (9.4) des Lagerzapfens (9) eingebracht ist, wobei die Ringnuten (9.4) zwischen den ringförmige Erhebungen (9.5; 12.1) angeordnet sind, und wobei die Gleitlagerbeschichtung (12) im Bereich der Ringnuten (9.4) ringförmige Vertiefungen (12.2) aufweist, die gegenüber den ringförmigen Erhebungen (12.1) radial beabstandet sind.

5. Rolle nach Anspruch 4, **dadurch gekennzeichnet, dass** die jeweilige Ringnut (9.4) eine Tiefe im Bereich von 0,05 mm bis 0,4 mm aufweist.

6. Rolle nach einem der Ansprüche 1 bis 5, des Weiteren **gekennzeichnet durch** einen Rollenmantel (8) aus Stahl, wobei an dem jeweiligen Lagerzapfen (9) ein im Wesentlichen zylindrischer oder kreisscheibenförmiger Verbindungsabschnitt (9.1) aus Stahl vorgesehen ist, der sich radial in Richtung des Rollenmantels (8) erstreckt, wobei mindestens einer der Verbindungsabschnitte (9.1) mindestens eine stirnseitig des Rollenmantels (8) mündende Durchgangsöffnung (9.3) aufweist, und wobei die mindestens eine Durchgangsöffnung (9.3) mit einem gasdurchlässigen Stopfenelement (10) aus keramischem Werkstoff verschlossen ist.

7. Rolle nach Anspruch 6, **dadurch gekennzeichnet, dass** das Stopfenelement (10) so beschaffen oder zusammengesetzt ist, dass es durch eine auf Aluminium oder Zink basierende Metallschmelze nicht benetzbar ist.

8. Rolle nach Anspruch 6 oder 7, **dadurch gekennzeichnet, dass** die Durchgangsöffnung (9.3) sich von innen nach außen verengt, wobei das Stopfenelement (10) entsprechend geformt und in der Durchgangsöffnung (9.3) axial festgelegt ist.

9. Rolle nach einem der Ansprüche 6 bis 8, **dadurch gekennzeichnet, dass** in dem durch den Rollenmantel (8) begrenzten Raum ein oder mehrere Füllkörper (11) aus keramischem Werkstoff angeordnet sind.

10. Rolle nach einem der Ansprüche 1 bis 9, **dadurch gekennzeichnet, dass** die äußere Stirnfläche (9.11) des jeweiligen Verbindungsabschnitts (9.1) mit einer Schutzbeschichtung versehen ist.

11. Rolle nach einem der Ansprüche 1 bis 10, **dadurch gekennzeichnet, dass** die Gesamtdichte der Rolle (5, 6) im Bereich des 0,8-fachen bis 1,2-fachen, vorzugsweise 1,0-fachen bis 1,1-fachen der Dichte der metallischen Schmelze liegt.

## Claims

1. Roller (5, 6) for deflecting or guiding a metal strip to be coated in a metal melt bath, the roller comprising bearing journals (9) that are arranged coaxially to one another for the rotary mounting of the roller (5, 6), **characterized in that** the respective bearing journal (9) comprises a plurality of axially spaced annular elevations (9.5; 12.1), which are provided with a plain-bearing coating (12) or are formed from a plain-bearing coating (12), and **in that** the plain-bearing coating (12) projects radially in the area of the annular elevations (9.5; 12.1) by a dimension in the range from 0.1 mm to 1.0 mm relative to a circumferential surface of the bearing journal (9).

2. Roller according to claim 1, **characterized in that** the plain-bearing coating (12) is a plain-bearing coating based on molybdenum, tungsten and/or chromium.

3. Roller according to claim 1 or 2, **characterized in that** the plain-bearing coating (12) projects radially in the area of the annular elevations (9.5; 12.1) relative to a circumferential surface of the bearing journal (9) by a dimension in the range from 0.1 mm to 0.5 mm.

4. Roller according to any one of claims 1 to 3, **characterized in that** the plain-bearing coating (12) is introduced into annular grooves (9.4) of the bearing journal (9), the annular grooves (9.4) being arranged between the annular elevations (9.5; 12.1), and the plain bearing coating (12) having annular depressions (12.2) in the area of the annular grooves (9.4), which depressions (12.2) are radially spaced in relation to the annular elevations (12.1).

5. Roller according to claim 4, **characterized in that** the respective annular groove (9.4) has a depth in the range from 0.05 mm to 0.4 mm.

6. Roller according to any one of claims 1 to 5, further **characterized by** a roller shell (8) of steel, wherein a substantially cylindrical or circular disc-shaped connecting portion (9.1) of steel is provided on the respective bearing journal (9), which connecting portion (9.1) extends radially in the direction of the roller shell (8), wherein at least one of the connecting portions (9.1) has at least one through-opening (9.3) opening out at the end face of the roller shell (8), and the at least one through-opening (9.3) being closed by a gas-permeable plug element (10) made of ceramic material.

7. Roller according to claim 6, **characterized in that** the plug element (10) is so designed or composed that it cannot be wetted by a metal melt based on aluminium or zinc.

8. Roller according to claim 6 or 7, **characterized in that** the through-opening (9.3) narrows from the inside to the outside, the plug element (10) being shaped accordingly and axially fixed in the through-opening (9.3).

9. Roller according to one of claims 6 to 8, **characterized in that** one or more filling bodies (11) of ceramic material are arranged in the space bounded by the roller shell (8).

10. Roller according to one of claims 1 to 9, **characterized in that** the outer end face (9.11) of the respective connecting portion (9.1) is provided with a protective coating.

11. Roller according to one of claims 1 to 10, **characterized in that** the overall density of the roller (5, 6) is in the range of 0.8 times to 1.2 times, preferably 1.0 times to 1.1 times the density of the metallic melt.

## Revendications

1. Rouleau (5, 6) de déviation ou de guidage d'une bande métallique à recouvrir dans un bain de métal en fusion, ledit rouleau comprenant des tourillons (9) disposés de manière coaxiale l'un par rapport à l'autre et servant au montage pivotant du rouleau (5, 6), **caractérisé en ce que** le tourillon respectif (9) présente plusieurs parties surélevées (9.5; 12.1), de forme annulaire, espacées axialement les unes des autres, lesquelles parties surélevées sont dotées d'un revêtement de palier lisse (12) ou bien sont formées par un revêtement de palier lisse (12), et **en ce que** le revêtement de palier lisse (12), dans la zone des parties surélevées (9.5; 12.1) de forme annulaire, fait saillie radialement suivant une plage de dimensions allant de 0,1 mm à 1,0 mm par rapport à une surface latérale du tourillon (9).

2. Rouleau selon la revendication 1, **caractérisé en ce que** le revêtement de palier lisse (12) est un revêtement de palier lisse à base de molybdène, de tungstène et/ou de chrome.

3. Rouleau selon la revendication 1 ou 2, **caractérisé en ce que** le revêtement de palier lisse (12), dans la zone des parties surélevées (9.5; 12.1) de forme annulaire, fait saillie radialement suivant une plage de dimensions allant de 0,1 mm à 0,5 mm par rapport à une surface latérale du tourillon (9).

4. Rouleau selon l'une quelconque des revendications 1 à 3, **caractérisé en ce que** le revêtement de palier lisse (12) est introduit dans des rainures annulaires (9.4) du tourillon (9), où les rainures annulaires (9.4) sont disposées entre les parties surélevées (9.5;12.1) de forme annulaire, et où le revêtement de palier lisse (12) présente des parties en creux (12.2), de forme annulaire, dans la zone des rainures annulaires (9.4), lesquelles parties en creux sont espacées radialement par rapport aux parties surélevées (12.1) de forme annulaire.

5. Rouleau selon la revendication 4, **caractérisé en ce que** la rainure annulaire respective (9.4) présente une profondeur se situant dans la plage de dimensions allant de 0,05 mm à 0,4 mm.

6. Rouleau selon l'une quelconque des revendications 1 à 5, **caractérisé en outre par** une enveloppe de rouleau (8) en acier, où, au niveau du tourillon respectif (9), il est prévu une partie d'assemblage (9.1) en acier, pratiquement cylindrique ou en forme de disque circulaire, laquelle partie d'assemblage s'étend radialement en direction de l'enveloppe de rouleau (8), où au moins l'une des parties d'assemblage (9.1) présente au moins une ouverture de passage (9.3) débouchant sur le côté frontal de l'enveloppe de rouleau (8), et où l'ouverture de passage (9.3) au moins au nombre de un est fermée par un élément obturateur (10) perméable aux gaz, ledit élément obturateur étant en matériau céramique.

7. Rouleau selon la revendication 6, **caractérisé en ce que** l'élément obturateur (10) est réalisé ou composé de manière telle, qu'il soit non mouillable par un bain de métal en fusion, ledit métal étant à base d'aluminium ou de zinc.

8. Rouleau selon la revendication 6 ou 7, **caractérisé en ce que** l'ouverture de passage (9.3) se rétrécit en partant de l'intérieur vers l'extérieur, où l'élément obturateur (10) est formé en conséquence et fixé axialement dans l'ouverture de passage (9.3).

9. Rouleau selon l'une quelconque des revendications 6 à 8, **caractérisé en ce qu'**un ou plusieurs corps de remplissage (11) en matériau céramique est ou sont disposé(s) dans l'espace délimité par l'enveloppe de rouleau (8).

10. Rouleau selon l'une quelconque des revendications 1 à 9, **caractérisé en ce que** la face frontale extérieure (9.11) de la partie d'assemblage respective (9.1) est dotée d'un revêtement de protection.

11. Rouleau selon l'une quelconque des revendications 1 à 10, **caractérisé en ce que** la masse volumique totale du rouleau (5, 6) se situe dans la plage allant de 0,8 fois à 1,2 fois, de préférence allant de 1,0 fois à 1,1 fois la masse volumique du bain de métal en fusion.
